# DEMANDE DE BREVET EUROPEEN

(11) **EP 3 382 856 A1**
(43) Date de publication de la demande: **03.10.2018**
(21) Numéro de dépôt: 18164029.3
(22) Date de dépôt: 26.03.2018
(51) Int. Cl.: H02K 1/32, H02K 9/19

(54) **MACHINE ÉLECTRIQUE TOURNANTE À REFROIDISSEMENT OPTIMISÉ**

(30) Priorité: 28.03.2017 FR 1752562
(71) Demandeur: VALEO EQUIPEMENTS ELECTRIQUES MOTEUR, 94046 Créteil Cedex (FR)
(72) Inventeur: EL BARAKA, Khadija, 94046 Creteil (FR); MATT, Jean-Claude, 94046 Creteil Cedex (FR); LABROSSE, Jean-Claude, 94046 Creteil (FR)

(57) **Abrégé**

L'invention porte principalement sur une machine électrique tournante comportant:
- un stator comportant un bobinage muni de chignons,
- un rotor monté sur un arbre,
- l'arbre comporte un alésage central (32) et au moins une ouverture (33) de projection d'un liquide de refroidissement sur un chignon du bobinage,
caractérisée en ce que l'ouverture (33) comporte un premier tronçon (331) et un deuxième tronçon (332),
- ledit premier tronçon (331) de premier diamètre ayant une première extrémité débouchant dans l'alésage central (32) et une deuxième extrémité débouchant dans le deuxième tronçon (332),
- ledit deuxième tronçon (332) ayant une première extrémité débouchant dans le premier tronçon (331) et une deuxième extrémité de deuxième diamètre (D2) débouchant vers un volume interne de la machine électrique (10),
- ledit deuxième diamètre (D2) étant plus grand que ledit premier diamètre (D1).

## Description

La présente invention porte sur une machine électrique tournante à refroidissement optimisé. L'invention trouve une application particulièrement avantageuse, mais non exclusive, avec les machines électriques réversibles de forte puissance devant être refroidie par un liquide de refroidissement.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre par exemple par l'intermédiaire de roulements. Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail. Ces enroulements sont des enroulements polyphasés connectés en étoile ou en triangle dont les sorties sont reliées à un pont redresseur de tension et/ou onduleur.

Dans certains types de chaînes de traction de véhicule automobile, une machine électrique tournante réversible de forte puissance est accouplée à la boîte de vitesses du véhicule. La machine électrique est alors apte à fonctionner dans un mode alternateur pour fournir notamment de l'énergie à la batterie et au réseau de bord du véhicule, et dans un mode moteur, non seulement pour assurer le démarrage du moteur thermique, mais également pour participer à la traction du véhicule seule ou en combinaison avec le moteur thermique. Compte tenu de sa puissance importante comprise entre 10kW et 50kW, la machine électrique a tendance à s'échauffer en cours de fonctionnement, en particulier au niveau du bobinage statorique dans lequel circulent des courants élevés.

Afin de refroidir ce bobinage, il est connu d'utiliser un arbre équipé d'ouvertures situées en regard des chignons, de telle sorte que du liquide de refroidissement, notamment de l'huile de la boîte de vitesses, soit pulvérisé via les ouvertures vers les chignons du bobinage.

L'invention vise à optimiser le refroidissement de ce type de machine en proposant une machine électrique tournante comportant:
- un stator comportant un bobinage muni de chignons,
- un rotor monté sur un arbre,
- l'arbre comporte un alésage central et au moins une ouverture de projection d'un liquide de refroidissement sur un chignon du bobinage,
caractérisée en ce que l'ouverture comporte un premier tronçon et un deuxième tronçon,
- ledit premier tronçon de premier diamètre ayant une première extrémité débouchant dans l'alésage central et une deuxième extrémité débouchant dans le deuxième tronçon,
- ledit deuxième tronçon ayant une première extrémité débouchant dans le premier tronçon et une deuxième extrémité de deuxième diamètre débouchant vers un volume interne de la machine électrique,
- ledit deuxième diamètre étant plus grand que ledit premier diamètre.

L'invention permet ainsi, grâce à la réalisation d'un étranglement à l'entrée des ouvertures d'éjection, de calibrer le débit de liquide de refroidissement projeté sur les chignons du bobinage statorique.

Selon une réalisation, les diamètres des tronçons sont définis en fonction d'une pression d'entrée du liquide de refroidissement et d'un débit désiré de liquide de refroidissement pour une utilisation à grande vitesse de la machine électrique tournante.

Selon une réalisation, un ratio entre le deuxième diamètre divisé par le premier diamètre est supérieur à 1.1.

Selon une réalisation, une distance entre un axe de l'arbre et la deuxième extrémité du premier tronçon débouchant dans le deuxième tronçon est inférieure à la valeur 11 divisée par une vitesse de rotation maximum de la machine électrique tournante.

Selon une réalisation, une paroi délimitant le deuxième tronçon présente une forme tronconique.

Selon une réalisation, une paroi délimitant le deuxième tronçon présente une forme sinueuse.

Selon une réalisation, ladite machine électrique tournante comporte deux ouvertures situées suivant une même circonférence autour de l'alésage central de l'arbre.

Selon une réalisation, ladite machine électrique tournante comporte au moins deux ouvertures espacées entre elles suivant une direction axiale de l'arbre.

Selon une réalisation, l'alésage central est à diamètre interne étagé, les ouvertures débouchant dans deux portions de l'alésage central de diamètres différents.

Selon une réalisation, une longueur du premier tronçon est de l'ordre de 1mm.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'une machine électrique tournante selon la présente invention;
La figure 2 est une vue en coupe longitudinale de l'arbre de la machine électrique tournante selon la présente invention;
La figure 3 est une vue illustrant un premier mode de réalisation d'une ouverture de projection de liquide de refroidissement réalisée dans l'arbre de la machine électrique;
La figure 4a une vue illustrant un deuxième mode de réalisation d'une ouverture de projection de liquide de refroidissement réalisée dans l'arbre de la machine électrique;
La figure 4b une vue illustrant un troisième mode de réalisation d'une ouverture de projection de liquide de refroidissement réalisée dans l'arbre de la machine électrique;
La figure 5 est une coupe longitudinale partielle illustrant une variante de réalisation d'un arbre à diamètre interne étagé appartenant à la machine électrique tournante selon l'invention.

Les éléments identiques, similaires, ou analogues conservent la même référence d'une figure à l'autre.

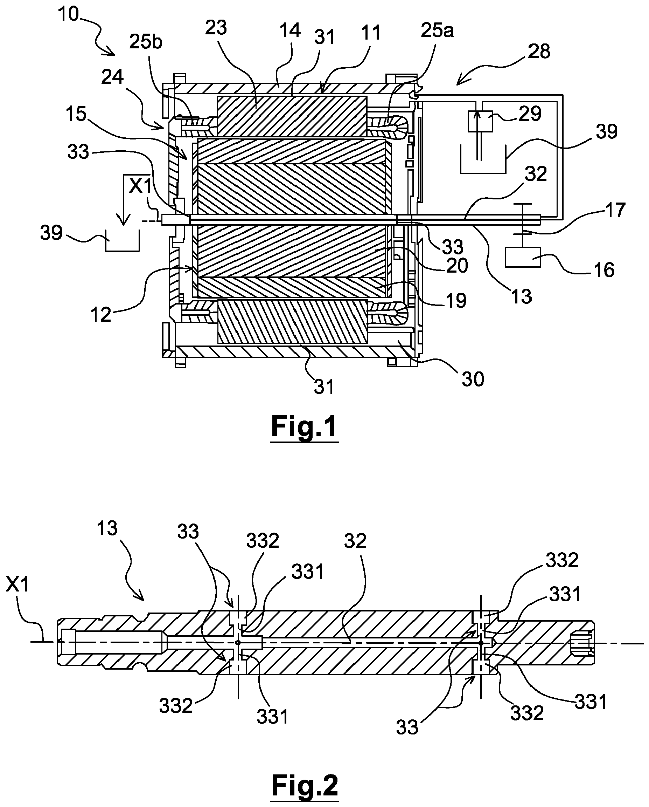

La figure 1 montre une machine électrique tournante 10 comportant un stator 11 polyphasé entourant un rotor 12 monté sur un arbre 13 d'axe X1. Le stator 11 est porté par un carter 14 délimitant un volume interne 15 de la machine électrique et configuré pour porter à rotation l'arbre 13 via des roulements à billes. Le stator 11 de la machine 10 entoure le rotor 12 avec présence d'un entrefer entre la périphérie interne du stator 11 et la périphérie externe du rotor 12.

Cette machine électrique 10 pourra être accouplée à une boîte de vitesses 16 appartenant à une chaîne de traction de véhicule automobile. A cet effet, l'arbre 13 comporte un pignon 17 à une extrémité destinée à engrener avec un pignon correspondant de la boîte de vitesses 16.

La machine 10 est alors apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique.

La puissance de la machine 10 pourra être comprise par exemple entre 10kW et 50kW.

Plus précisément, le rotor 12 comporte un corps 19 sous la forme d'un paquet de tôles afin de diminuer les courants de Foucault. Des aimants permanents 20 sont implantés dans des ouvertures du corps 19. Les aimants 20 pourront être en terre rare ou en ferrite selon les applications et la puissance recherchée de la machine 10. Alternativement, les pôles du rotor 12 pourront être formés par des bobines.

Par ailleurs, le stator 11 comporte un corps 23 en forme de paquet de tôles doté d'encoches pour le montage du bobinage 24. Le bobinage 24 comporte un ensemble d'enroulements de phase traversant les encoches du corps 23 du stator 11 et formant un chignon avant 25a situé du côté du pignon 17 et un chignon arrière 25b situé du côté opposé. Les chignons 25a, 25b s'étendant en saillie de part et d'autre du corps de stator 23.

Les enroulements de phase sont obtenus par exemple à partir d'un fil continu recouvert d'émail. En variante, les enroulements de phase sont réalisés à partir d'éléments conducteurs en forme d'épingles reliées entre elles par exemple par soudage. Ces enroulements sont par exemple des enroulements triphasés connectés en étoile ou en triangle. Les sorties des enroulements de phase sont reliées à un pont redresseur et/ou onduleur comportant des composants électroniques, tels que des diodes ou des transistors du type MOSFET, notamment lorsqu'il s'agit d'une machine réversible.

La machine électrique 10 est refroidie au moyen d'un circuit de refroidissement 28 agencé pour permettre notamment l'écoulement d'un liquide de refroidissement, en l'occurrence de l'huile, entre le carter 14 et le corps 23 du stator 11, dans la direction de l'axe X1. A cet effet, le circuit de refroidissement 28 comporte une pompe 29 permettant d'acheminer l'huile, dans une chambre de distribution 30 ménagée dans le carter 14, laquelle permet de faire circuler l'huile à l'intérieur de rainures 31 s'étendant axialement le long du stator 11 et répartis angulairement de manière régulière sur la circonférence du stator 11.

Le circuit de refroidissement 28 fonctionne en boucle fermée, de telle façon que l'huile est prélevée par la pompe 29 dans un réservoir 39 et est récupérée après circulation dans la machine 10 dans ce réservoir 39. Ce réservoir 39 pourra correspondre au carter de la boîte de vitesses.

En outre, afin d'améliorer sa performance, le circuit de refroidissement 28 est configuré de telle façon que l'huile est projetée sur les chignons de bobinage 25a, 25b du stator 11.

A cette fin, comme cela est représenté sur la figure 2, l'arbre 13 comporte un alésage central 32 et quatre ouvertures 33 de projection d'huile sur les chignons 25a, 25b du bobinage 24. En l'occurrence, l'arbre 13 comporte deux ensembles de deux ouvertures 33 espacés entre eux suivant une direction axiale de l'arbre 13.

Chaque ensemble comporte deux ouvertures 33 situées suivant une même circonférence autour de l'alésage central 32, c'est-à-dire que les deux ouvertures 33 d'un même ensemble se situent dans un même plan radial. De préférence, les deux ouvertures 33 d'un ensemble donné sont diamétralement opposées et débouchent en face d'un chignon 25a, 25b correspondant. Bien entendu, le nombre d'ouvertures 33 et leur orientation angulaire pourront varier en fonction des besoins de l'application.

Chaque ouverture 33 comporte un premier tronçon 331 de premier diamètre D1 et un deuxième tronçon 332 de deuxième diamètre D2. Le premier tronçon 331 a une première extrémité débouchant dans l'alésage central 32 et une deuxième extrémité débouchant dans le deuxième tronçon 332. Le deuxième tronçon 332 a une première extrémité débouchant dans le premier tronçon 331 et une deuxième extrémité débouchant vers le volume interne 15 de la machine électrique 10.

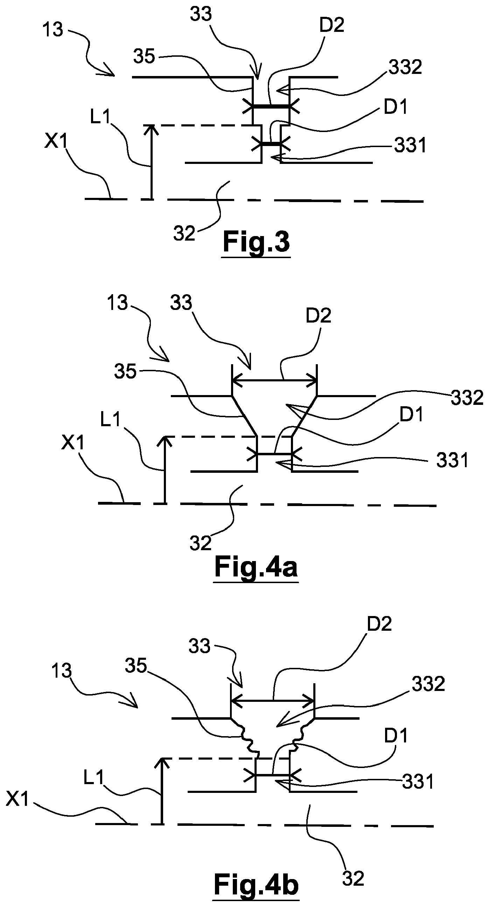

Comme cela est bien visible sur la figure 3, le deuxième diamètre D2 du deuxième tronçon 332 est plus grand que le premier diamètre D1 du premier tronçon 331. Le premier tronçon 331 constitue ainsi un tronçon d'étranglement permettant de calibrer le débit de liquide de refroidissement projeté sur les chignons 25a, 25b du bobinage statorique 24.

Les diamètres D1, D2 des tronçons 331, 332 sont définis en fonction d'une pression d'entrée d'huile et d'un débit désiré d'huile pour une utilisation à grande vitesse de la machine électrique tournante 10.

Un ratio entre le deuxième diamètre D2 divisé par le premier diamètre D1 est de préférence supérieur à 1.1. Dans un exemple de réalisation, le diamètre D1 pourra par exemple être de l'ordre de 1,5 mm et le diamètre D2 pourra être de l'ordre de 2.5mm. On obtient alors un ratio D2/D1=1.6.

En outre, la distance L1 entre un axe X1 de l'arbre et la deuxième extrémité du premier tronçon 331 débouchant dans le deuxième tronçon 332 est inférieure à la valeur 11 divisée par la vitesse de rotation maximum de la machine électrique tournante 10.

Dans le mode de réalisation de la figure 4a, la paroi 35 délimitant le deuxième tronçon 332 présente une forme tronconique dont le diamètre augmente lorsque l'on se déplace de la première extrémité débouchant dans le premier tronçon 331 vers la deuxième extrémité débouchant à l'intérieur du volume interne 15 de la machine électrique 10. Dans ce cas, le deuxième diamètre D2 à considérer pour établir le ratio précédent (D2/D1) est celui de la deuxième extrémité du deuxième tronçon 332, soit le plus grand diamètre du deuxième tronçon 332.

Dans le mode de réalisation de la figure 4b, la paroi 35 délimitant le deuxième tronçon 332 pourra présenter une forme sinueuse. Cette forme sinueuse suit globalement une forme tronconique dont le diamètre augmente lorsque l'on se déplace de la première extrémité débouchant dans le premier tronçon 331 vers la deuxième extrémité débouchant à l'intérieur du volume interne 15 de la machine électrique 10. Dans ce cas, le deuxième diamètre D2 à considérer pour établir le ratio précédent (D2/D1) est celui de la deuxième extrémité du deuxième tronçon 332, soit le plus grand diamètre du deuxième tronçon 332.

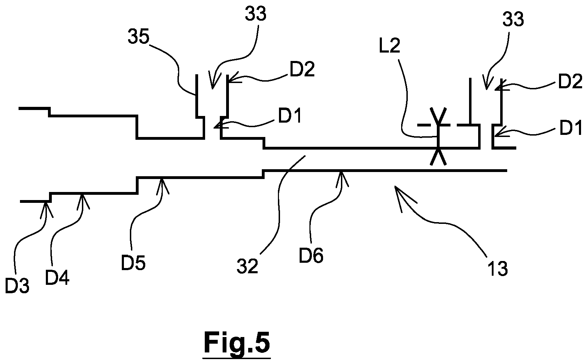

Dans le mode de réalisation de la figure 5, l'alésage central 32 présente un diamètre interne étagé.

Ainsi, l'alésage central 32 pourra comporter quatre portions en communication les unes avec les autres ayant des diamètres différents D3, D4, D5, D6, valant par exemple respectivement 9mm, 8mm, 4mm, et 3mm.

Deux ouvertures 33 pourront déboucher dans deux portions de diamètres différents. En l'occurrence, au moins une première ouverture 33 pourra par exemple déboucher dans la portion de l'alésage central 32 de diamètre D5 et au moins une deuxième ouverture 33 pourra par exemple déboucher dans la portion d'alésage de diamètre D6.

Une longueur L2 du premier tronçon 331 pourra être de l'ordre de 1mm.

L'invention pourra également être mise en oeuvre avec une machine refroidie par eau.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Machine électrique tournante (10) comportant:
- un stator (11) comportant un bobinage (24) muni de chignons (25a, 25b),
- un rotor (12) monté sur un arbre (13),
- l'arbre (13) comporte un alésage central (32) et au moins une ouverture (33) de projection d'un liquide de refroidissement sur un chignon (25a, 25b) du bobinage (24),
**caractérisée en ce que** l'ouverture (33) comporte un premier tronçon (331) et un deuxième tronçon (332),
- ledit premier tronçon (331) de premier diamètre (D1) ayant une première extrémité débouchant dans l'alésage central (32) et une deuxième extrémité débouchant dans le deuxième tronçon (332),
- ledit deuxième tronçon (332) ayant une première extrémité débouchant dans le premier tronçon (331) et une deuxième extrémité de deuxième diamètre (D2) débouchant vers un volume interne (15) de la machine électrique (10),
- ledit deuxième diamètre (D2) étant plus grand que ledit premier diamètre (D1).

2. Machine électrique tournante selon la revendication 1, **caractérisée en ce que** les diamètres (D1, D2) des tronçons (331, 332) sont définis en fonction d'une pression d'entrée du liquide de refroidissement et d'un débit désiré de liquide de refroidissement pour une utilisation à grande vitesse de la machine électrique tournante (10).

3. Machine électrique tournante selon la revendication 1 ou 2, **caractérisée en ce qu'**un ratio entre le deuxième diamètre (D2) divisé par le premier diamètre (D1) est supérieur à 1.1.

4. Machine électrique tournante selon l'une quelconque des revendications 1 à 3, **caractérisée en ce qu'**une distance (L1) entre un axe (X1) de l'arbre (13) et la deuxième extrémité du premier tronçon (331) débouchant dans le deuxième tronçon (332) est inférieure à la valeur 11 divisée par une vitesse de rotation maximum de la machine électrique tournante (10).

5. Machine électrique tournante selon l'une quelconque des revendications 1 à 4, **caractérisée en ce qu'**une paroi (35) délimitant le deuxième tronçon (332) présente une forme tronconique.

6. Machine électrique tournante selon l'une quelconque des revendications 1 à 5, **caractérisée en ce qu'**une paroi (35) délimitant le deuxième tronçon (332) présente une forme sinueuse.

7. Machine électrique tournante selon l'une quelconque des revendications 1 à 6, **caractérisée en ce qu'**elle comporte deux ouvertures (33) situées suivant une même circonférence autour de l'alésage central (32) de l'arbre (13).

8. Machine électrique tournante selon l'une quelconque des revendications 1 à 7, **caractérisée en ce qu'**elle comporte au moins deux ouvertures (33) espacées entre elles suivant une direction axiale de l'arbre (13).

9. Machine électrique tournante selon la revendication 8, **caractérisée en ce que** l'alésage central (32) est à diamètre interne étagé, et **en ce que** les ouvertures (33) débouchent dans deux portions de l'alésage central (32) de diamètres différents.

10. Machine électrique tournante selon l'une quelconque des revendications 1 à 9, **caractérisé en ce qu'**une longueur (L2) du premier tronçon (331) est de l'ordre de 1 mm.
